# EUROPÄISCHE PATENTANMELDUNG

(11) **EP 2 675 245 A2**
(43) Veröffentlichungstag der Anmeldung: **18.12.2013**
(21) Anmeldenummer: 13165845.2
(22) Anmeldetag: 29.04.2013
(51) Int. Cl.: H05B 33/08

(54) **Vorrichtung zum Erzeugen von elektromagnetischer Strahlung und elektronisches Vorschaltgerät**

(30) Priorität: 12.06.2012 DE 102012209781
(71) Anmelder: OSRAM GmbH, 80807 München (DE)
(72) Erfinder: Reiser, Ludwig, 86485 Biberbach (DE)

(57) **Zusammenfassung**

In verschiedenen Ausführungsbeispielen wird eine Vorrichtung (10) zum Erzeugen von elektromagnetischer Strahlung bereitgestellt. Die Vorrichtung (10) weist eine Strahlungseinheit (30) und ein elektronisches Vorschaltgerät (20) auf. Die Strahlungseinheit (30) weist mindestens ein elektromagnetische Strahlung emittierendes Halbleiter-Bauelement (LED1, ..., LEDN) zum Erzeugen der elektromagnetischen Strahlung und einen ersten Träger (39) zum Tragen des elektromagnetische Strahlung emittierenden Halbleiter-Bauelements (LED1, ..., LEDN) auf. Das elektronische Vorschaltgerät (20) weist einen Umrichter, der mindestens ein Umrichtelement (22, 24, 26) aufweist, einen zweiten Träger (29) zum Tragen mindestens eines der Umrichtelemente (22, 24, 26) und einen Resonanzschwingkreis auf. Der Resonanzschwingkreist ist zum Bereitstellen einer Betriebsspannung für das elektromagnetische Strahlung emittierende Halbleiter-Bauelement (LED1, ..., LEDN) mit der Strahlungseinheit (30) elektrisch gekoppelt. Mindestens ein Resonanzelement (32) des Resonanzschwingkreises ist auf dem ersten Träger (39) angeordnet.

## Beschreibung

Die Erfindung betrifft eine Vorrichtung zum Erzeugen von elektromagnetischer Strahlung. Die Vorrichtung weist eine Strahlungseinheit zum Erzeugen der elektromagnetischen Strahlung und ein elektronisches Vorschaltgerät auf. Das elektronische Vorschaltgerät weist einen Umrichter auf, der mindestens ein Umrichtelement aufweist. Das elektronische Vorschaltgerät ist zum Bereitstellen einer Betriebsspannung mit der Strahlungseinheit elektrisch gekoppelt.

Es sind Vorrichtungen zum Erzeugen von elektromagnetischer Strahlung, beispielsweise von Licht, bekannt, bei denen die Strahlungseinheit einen Kolben, Glaskolben und/oder Brenner aufweist, in den Leuchtstoffe eingebracht sind, die durch Anlegen einer elektrischen Spannung zum Leuchten angeregt werden. Derartige Vorrichtungen sind beispielsweise Entladungslampen, beispielsweise Druckentladungslampen, beispielsweise Hoch- oder Niederdruckentladungslampen und/oder CFL-Lampen (Compact Fluorescent Lamp). Teilweise werden diese Vorrichtungen auch als Energiesparlampen bezeichnet.

Zum Steuern und/oder Versorgen der Strahlungseinheiten mit der nötigen Betriebsspannung oder dem nötigen Betriebsstrom werden beispielsweise elektronische Vorschaltgeräte (EVG) verwendet. Die elektronischen Vorschaltgeräte können körperlich von den Strahlungseinheiten getrennt sein und beispielsweise über Stecksockel mit den Strahlungseinheiten koppelbar sein oder die elektronischen Vorschaltgeräte können beispielsweise in einem Gehäuse der Strahlungseinheiten angeordnet sein. Letztere werden beispielsweise auch als CFLi-Lampen (Compact Fluorescent Lamp integrated) bezeichnet. Elektronische Vorschaltgeräte können beispielsweise Umrichter aufweisen, die eine an das elektronische Vorschaltgerät anzulegende Netzspannung in eine für die Strahlungseinheit nötige Betriebsspannung umwandeln. Die Umrichter können beispielsweise frei schwingend ausgebildet sein und/oder keiner Zwangssteuerung unterliegen. Derartige frei schwingende Umrichter können kostengünstig hergestellt werden, da sie grundsätzlich keinen Steuer-IC benötigen. Elektronische Vorschaltgeräte mit frei schwingenden Umrichtern werden auch als frei schwingende elektronische Vorschaltgeräte bezeichnet. Bei frei schwingenden elektronischen Vorschaltgeräten schwingt in unbelastetem Zustand, also beispielsweise bei nicht leuchtender Entladungslampe, die Betriebsspannung auf, was zu einer schnellen Zündung der Entladungslampe beiträgt und die Entladungslampe zum Leuchten bringt. Die elektronischen Vorschaltgeräte können beispielsweise elektrische Schwingkreise aufweisen, die mit den Strahlungseinheiten gekoppelt sind. Die Schwingkreise können derart mit den Strahlungseinheiten gekoppelt sein, dass eine Zerstörung der Strahlungseinheit oder eine elektrische Trennung der Strahlungseinheit von dem elektronischen Vorschaltgerät eine Unterbrechung der freien Schwingung des Umrichters bewirkt, wodurch ein Aufschwingen des elektronischen Vorschaltgeräts unterbunden wird und dadurch eine Beschädigung des elektronischen Vorschaltgeräts vermieden wird.

Neben den Entladungslampen werden heutzutage immer häufiger zum Erzeugen elektromagnetischer Strahlung Vorrichtungen verwendet, deren Strahlungseinheiten elektromagnetische Strahlung emittierende Halbleiter-Bauelemente nutzen. Die Strahlungseinheiten können beispielsweise als Light-Engines bezeichnet werden. Derartige Strahlungseinheiten benötigen als Betriebsstrom einen Gleichstrom, der beispielsweise mit Hilfe von LED-Treibern bereitgestellt werden kann. Die LED-Treiber sind häufig ähnlich aufgebaut wie Schaltnetzteile zum Erzeugen einer Gleichspannung. Die LED-Treiber sind grundsätzlich so aufgebaut, dass eine Beschädigung der Strahlungseinheit oder eine elektrische Trennung der Strahlungseinheit von dem LED-Treiber erkannt wird und der LED-Treiber intern abschaltet, wobei beispielsweise eine interne elektrische Oszillation im LED-Treiber aktiv unterbrochen wird.

Verglichen mit LED-Treibern können elektronische Vorschaltgeräte mit frei schwingenden Umrichtern relativ einfach und kostengünstig hergestellt werden. Wird jedoch zum Betreiben einer Strahlungseinheit mit elektromagnetische Strahlung emittierenden Halbleiter-Bauelementen ein frei schwingendes elektronisches Vorschaltgerät verwendet, dessen Ausgangsspannung gleich gerichtet wird, so kann eine Beschädigung der Strahlungseinheit und/oder eine elektrische Trennung der Strahlungseinheit von dem elektronischen Vorschaltgerät zu einem ungedämpften Aufschwingen des Resonanzkreises und/oder zur Beschädigung des elektronischen Vorschaltgeräts führen.

In verschiedenen Ausführungsbeispielen werden eine Vorrichtung zum Erzeugen elektromagnetischer Strahlung und/oder ein elektronisches Vorschaltgerät bereitgestellt, die auf einfache, kostengünstige und/oder sichere Art und Weise ermöglichen, eine Strahlungseinheit mit elektromagnetische Strahlung emittierenden Halbleiter-Bauelementen mit einem bzw. dem elektronischen Vorschaltgerät zu betreiben.

In verschiedenen Ausführungsbeispielen wird eine Vorrichtung zum Erzeugen von elektromagnetischer Strahlung bereitgestellt. Die Vorrichtung weist eine Strahlungseinheit auf, die mindestens ein elektromagnetische Strahlung emittierendes Halbleiter-Bauelement zum Erzeugen der elektromagnetischen Strahlung und einen ersten Träger zum Tragen des elektromagnetische Strahlung emittierenden Halbleiter-Bauelements aufweist. Die Vorrichtung weist weiter ein elektronisches Vorschaltgerät auf. Das elektronische Vorschaltgeräte weist einen Umrichter, der mindestens ein Umrichtelement aufweist, einen zweiten Träger zum Tragen mindestens eines der Umrichtelemente und einen Resonanzschwingkreis auf. Der Resonanzschwingkreis ist zum Bereitstellen einer Betriebsspannung für das elektromagnetische Strahlung emittierende Halbleiter-Bauelement mit der Strahlungseinheit elektrisch gekoppelt. Mindestens ein Resonanzelement des Resonanzschwingkreises ist auf dem ersten Träger angeordnet.

Falls nur ein Resonanzelement des Resonanzschwingkreises auf dem ersten Träger der Strahlungseinheit angeordnet ist, so bewirkt diese körperliche Trennung des entsprechenden Resonanzelements von dem elektronischen Vorschaltgerät, dass bei einer elektrischen Trennung der Strahlungseinheit von dem elektronischen Vorschaltgerät der Resonanzschwingkreis unterbrochen ist und die Betriebsspannung nicht so weit aufschwingen kann, dass das elektronische Vorschaltgerät beschädigt wird.

Falls zwei Resonanzelemente des Resonanzschwingkreises und/oder der gesamte Resonanzschwingkreis des elektronischen Vorschaltgeräts auf dem ersten Träger der Strahlungseinheit angeordnet sind, so bewirkt diese körperliche Trennung der Resonanzelemente bzw. des Resonanzschwingkreises von dem Umrichter des elektronischen Vorschaltgeräts, dass bei einer elektrischen Trennung der Strahlungseinheit von dem elektronischen Vorschaltgerät der Resonanzschwingkreis von dem Umrichter elektrisch entkoppelt ist und die Betriebsspannung nicht so weit aufschwingen kann, dass das elektronische Vorschaltgerät beschädigt wird.

Das elektronische Vorschaltgerät kann auch als LED-Treiber bezeichnet werden. Die Strahlungseinheit kann beispielsweise einen Gleichrichter zum Gleichrichten der Betriebsspannung und/oder einen Glätter zum Glätten der Betriebsspannung aufweisen. Die elektromagnetische Strahlung kann beispielsweise Licht im sichtbaren Bereich, Infrarot-Licht und/oder UV-Licht sein. Das elektromagnetische Strahlung emittierende Halbleiter-Bauelement kann beispielsweise eine LED oder eine OLED sein. Der Resonanzschwingkreis weist beispielsweise eine Spule und einen Kondensator auf. Die Betriebsspannung ist beispielsweise eine Wechselspannung und kann auch als Ausgangsspannung des elektronischen Vorschaltgeräts bezeichnet werden. Das Anordnen des Resonanzschwingkreises und/oder des bzw. der Resonanzelemente auf dem ersten Träger kann auf dem zweiten Träger zu einer Platzersparnis beitragen.

Bei verschiedenen Ausführungsformen weist das auf dem ersten Träger angeordnete Resonanzelement eine Spule auf. Beispielsweise weist der Resonanzschwingkreis die Spule und den Kondensator auf, wobei der Kondensator auf dem zweiten Träger angeordnet ist und die Spule auf dem ersten Träger angeordnet ist.

Bei verschiedenen Ausführungsformen weist das auf dem ersten Träger angeordnete Resonanzelement den Kondensator auf. Beispielsweise weist der Resonanzschwingkreis die Spule und den Kondensator auf, wobei die Spule auf dem zweiten Träger angeordnet ist und der Kondensator auf dem ersten Träger angeordnet ist.

Bei verschiedenen Ausführungsformen weist der Resonanzschwingkreis die Spule und den Kondensator auf und die Spule und der Kondensator sind auf dem ersten Träger angeordnet.

Bei verschiedenen Ausführungsformen weist der Umrichter als Umrichtelemente einen ersten Gleichrichter, einen ersten Glätter und/oder einen Wechselrichter auf. Der erste Gleichrichter, der erste Glätter und/oder der Wechselrichter sind auf dem zweiten Träger angeordnet. Der erste Gleichrichter des Umrichters dient zum Gleichrichten einer Netzspannung, mit der das elektronische Vorschaltgerät versorgt wird. Der erste Glätter des elektronischen Vorschaltgeräts dient zum Glätten der Netzspannung oder der gleich gerichteten Netzspannung. Der Wechselrichter dient zum Umwandeln der gleich gerichteten und/oder geglätteten Netzspannung in die Betriebsspannung.

Bei verschiedenen Ausführungsformen ist das elektronische Vorschaltgerät frei schwingend ausgebildet. Dass das elektronische Vorschaltgerät frei schwingend ausgebildet ist, bedeutet beispielsweise, dass der Umrichter frei schwingend ausgebildet ist und/oder dass der Umrichter nicht zwangsgesteuert ist und/oder dass der Umrichter keinen Steuer-IC aufweist. Beispielsweise weist der Umrichter, beispielsweise der Wechselrichter, eine Halbbrückenschaltung mit Ringkernsteuerung, eine frei schwingende Schaltungsanordnung (siehe bspw. EP 0 863 690 A2) oder eine Phasensteuerung auf.

Bei verschiedenen Ausführungsformen weist die Strahlungseinheit einen zweiten Gleichrichter auf, der auf dem ersten Träger angeordnet ist. Der zweite Gleichrichter weist beispielsweise mindestens eine Diode auf und/oder ist elektrisch zwischen das auf dem ersten Träger angeordnete Resonanzelement und das elektromagnetische Strahlung emittierende Halbleiter-Bauelement geschaltet. Der zweite Gleichrichter und/oder die Diode der Strahlungseinheit sind so ausgebildet und angeordnet, dass sie die der Strahlungseinheit von dem elektronischen Vorschaltgerät bereitgestellte Betriebsspannung gleich richten.

Bei verschiedenen Ausführungsformen ist das elektromagnetische Strahlung emittierende Halbleiter-Bauelement eine LED oder eine OLED.

In verschiedenen Ausführungsbeispielen wird ein elektronisches Vorschaltgerät zum Bereitstellen einer Betriebsspannung für mindestens ein elektromagnetische Strahlung emittierendes Halbleiter-Bauelement bereitgestellt. Das elektronische Vorschaltgerät weist einen Resonanzschwingkreis auf, der einen Anschluss zum Bereitstellen der Betriebsspannung für das elektromagnetische Strahlung emittierende Halbleiter-Bauelement aufweist. Das elektronische Vorschaltgerät weist weiter einen Spannungsbegrenzer auf, der so mit dem Resonanzschwingkreis elektrisch gekoppelt ist, dass er die Betriebsspannung begrenzt. Der Spannungsbegrenzer bewirkt, dass bei einer elektrischen Trennung der Strahlungseinheit von dem elektronischen Vorschaltgerät und/oder bei einer Beschädigung der Strahlungseinheit die Betriebsspannung begrenzt ist und nicht so weit aufschwingen kann, dass das elektronische Vorschaltgerät beschädigt wird.

Bei verschiedenen Ausführungsformen weist der Spannungsbegrenzer mindestens eine Diode auf. Der Spannungsbegrenzer kann auch zwei oder mehr Dioden aufweisen. Die Diode bzw. die Dioden sind so ausgebildet und angeordnet, dass sie im Normalbetrieb der Vorrichtung in Sperrrichtung betrieben werden, so dass sie keinen Strom leiten, und dass sie bei elektrischer Trennung der Strahlungseinheit von dem elektronischen Vorschaltgerät und/oder bei Beschädigung der Strahlungseinheit in Durchlassrichtung betrieben werden.

Bei verschiedenen Ausführungsformen weist der Spannungsbegrenzer zwei in Reihe geschaltete Dioden auf. Falls der Spannungsbegrenzer drei oder mehr Dioden aufweist, so können die entsprechenden Dioden ebenfalls in Reihe geschaltet sein.

Bei verschiedenen Ausführungsformen ist das elektronische Vorschaltgerät, beispielsweise der Umrichter, frei schwingend ausgebildet.

In verschiedenen Ausführungsbeispielen wird eine Vorrichtung zum Erzeugen von elektromagnetischer Strahlung bereitgestellt, die das elektronische Vorschaltgerät mit dem Spannungsbegrenzer und das mindestens eine elektromagnetische Strahlung emittierende Halbleiter-Bauelement zum Erzeugen der elektromagnetischen Strahlung aufweist, wobei das elektromagnetische Strahlung emittierende Halbleiter-Bauelement mit dem Anschluss des Resonanzschwingkreises elektrisch gekoppelt ist.

Bei verschiedenen Ausführungsformen ist das elektromagnetische Strahlung emittierende Halbleiter-Bauelement eine LED oder eine OLED.

Bei verschiedenen Ausführungsformen weist das elektronische Vorschaltgerät den Spannungsbegrenzer auf und das Resonanzelement ist auf dem ersten Träger angeordnet.

Ausführungsbeispiele der Erfindung sind in den Figuren dargestellt und werden im Folgenden näher erläutert.

Es zeigen
- Figur 1: ein Blockschaltbild eines Ausführungsbeispiels einer Vorrichtung zum Erzeugen elektromagnetischer Strahlung;
- Figur 2: ein Blockschaltbild eines Ausführungsbeispiels einer Vorrichtung zum Erzeugen elektromagnetischer Strahlung;
- Figur 3: ein Blockschaltbild eines Ausführungsbeispiels einer Vorrichtung zum Erzeugen elektromagnetischer Strahlung;
- Figur 4: eine Detailansicht eines Blockschaltbilds einer Ausführungsform einer Vorrichtung zum Erzeugen elektromagnetischer Strahlung;
- Figur 5: eine Detailansicht eines Blockschaltbilds einer Ausführungsform einer Vorrichtung zum Erzeugen elektromagnetischer Strahlung;
- Figur 6: eine Detailansicht eines Blockschaltbilds einer Ausführungsform einer Vorrichtung zum Erzeugen elektromagnetischer Strahlung;
- Figur 7: eine Detailansicht eines Blockschaltbilds einer Ausführungsform einer Vorrichtung zum Erzeugen elektromagnetischer Strahlung.

In der folgenden ausführlichen Beschreibung wird auf die beigefügten Zeichnungen Bezug genommen, die Teil dieser Beschreibung bilden und in denen zur Veranschaulichung spezifische Ausführungsbeispiele gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsbeispielen in einer Anzahl verschiedener Orientierungen positioniert werden können, dient die Richtungsterminologie zur Veranschaulichung und ist auf keinerlei Weise einschränkend. Es versteht sich, dass andere Ausführungsbeispiele benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen Ausführungsbeispiele miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Ein elektromagnetische Strahlung emittierendes Halbleiter-Bauelement kann in verschiedenen Ausführungsbeispielen als eine elektromagnetische Strahlung emittierende Diode, als eine organische elektromagnetische Strahlung emittierende Diode, als ein elektromagnetische Strahlung emittierender Transistor oder als ein organischer elektromagnetische Strahlung emittierender Transistor ausgebildet sein. Die elektromagnetische Strahlung kann beispielsweise Licht im sichtbaren Bereich, UV-Licht und/oder Infrarot-Licht sein. In diesem Zusammenhang kann das elektromagnetische Strahlung emittierende Halbleiter-Bauelement beispielsweise als Licht emittierende Diode (light emitting diode, LED) als organische Licht emittierende Diode (organic light emitting diode, OLED), als Licht emittierender Transistor oder als organischer Licht emittierender Transistor ausgebildet sein. Das Licht emittierende Halbleiter-Bauelement kann in verschiedenen Ausführungsbeispielen Teil einer integrierten Schaltung sein. Weiterhin kann eine Mehrzahl von Licht emittierenden Halbleiter-Bauelementen vorgesehen sein, beispielsweise untergebracht in einem gemeinsamen Gehäuse.

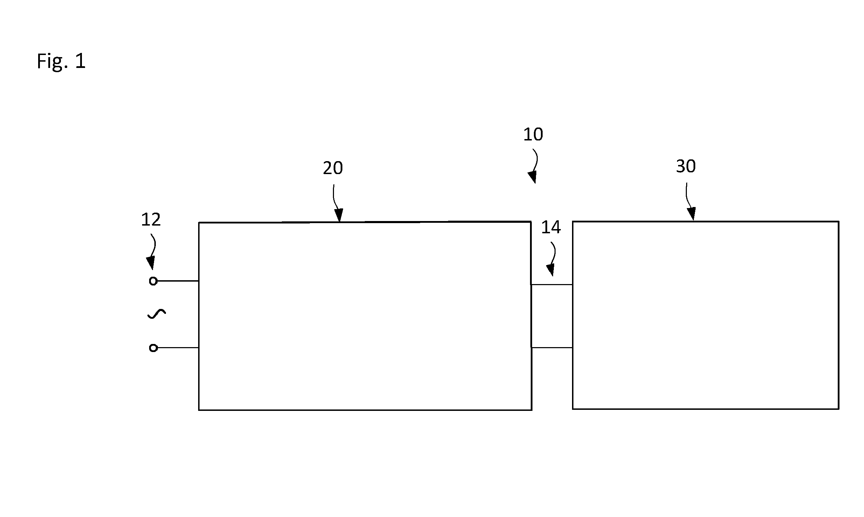

**Fig.1** zeigt eine Vorrichtung 10 zum Erzeugen elektromagnetischer Strahlung, beispielsweise der vorstehen erläuterten elektromagnetischen Strahlung. Die Vorrichtung 10 weist ein elektronisches Vorschaltgerät 20 und eine Strahlungseinheit 30 auf. Das elektronische Vorschaltgerät 20 kann mit einer Energieversorgung 12 gekoppelt sein, über die dem elektronischen Vorschaltgerät 20 eine Netzspannung bereitgestellt werden kann und/oder über die das elektronische Vorschaltgerät 20 mit elektrischem Strom versorgt werden kann. Das elektronische Vorschaltgerät 20 eignet sich zum Bereitstellen einer Betriebsspannung und/oder eines Betriebsstroms für die Strahlungseinheit 30.

Bei der Vorrichtung 10 kann es sich beispielsweise um eine LED-Retrofit-Lampe handeln, deren äußeres Erscheinungsbild beispielsweise weitgehend dem einer herkömmlichen Glühbirne entspricht, als Strahlungsquellen jedoch elektromagnetische Strahlung emittierende Halbleiter-Bauelemente und keine Glühwendel verwendet werden. Die Vorrichtung 10 kann jedoch auch eine andere Beleuchtungsanordnung sein.

Das elektronische Vorschaltgerät 20 und die Strahlungseinheit 30 können körperlich voneinander getrennt sein und/oder über ein nicht dargestelltes Gehäuse körperlich mit einander gekoppelt sein. Das elektronische Vorschaltgerät 20 ist mit der Strahlungseinheit 30 über einen Anschluss 14 elektrisch gekoppelt. Der Anschluss 14 kann dauerhaft oder lösbar ausgebildet sein. In anderen Worten kann die Strahlungseinheit 30 über den Anschluss 14 dauerhaft oder lösbar mit dem elektronischen Vorschaltgerät 20 verbunden sein. Als dauerhafte Verbindung kann der Anschluss 14 beispielsweise elektrisch leitende Kabel aufweisen, die beispielsweise einerseits an dem elektronischen Vorschaltgerät 20 und andererseits an der Strahlungseinheit 30 befestigt, beispielsweise festgelötet oder festgeklemmt, sind. Als lösbare Verbindung kann der Anschluss 14 beispielsweise Federkontakte aufweisen, die mit einer Vorspannung zwischen die Strahlungseinheit 30 und das elektronische Vorschaltgerät 20 klemmbar sind.

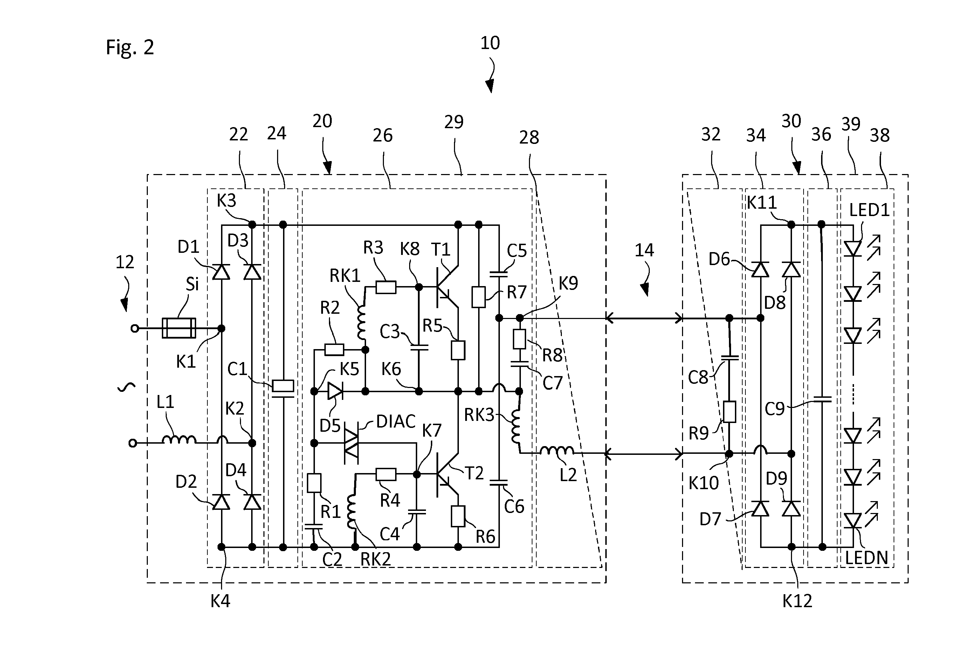

**Fig. 2** zeigt einen elektronischen Schaltkreis eines Ausführungsbeispiels der Vorrichtung 10 zum Erzeugen elektromagnetischer Strahlung, bei dem die Strahlungseinheit 30 und das elektronische Vorschaltgerät 20 körperlich voneinander getrennt sind und/oder über das nicht dargestellte Gehäuse körperlich mit einander gekoppelt sind.

Die nachfolgend angeführten Parameterbereiche der in den Figuren gezeigten Bauelemente sind beispielhaft für eine Leistungsaufnahme der Vorrichtung 10 von 9 W angenommen. Bei einer davon abweichenden Leistungsaufnahme können entsprechend andere geeignete Bauelemente für die Vorrichtung 10 vorgesehen werden.

Das elektronische Vorschaltgerät 20 weist einen Umrichter mit mehreren Umrichtelementen auf. Die Umrichtelemente weisen beispielsweise einen ersten Gleichrichter 22, einen ersten Glätter 24 und/oder einen Wechselrichter 26 auf. Das elektronische Vorschaltgerät 20 weist weiter einen Resonanzschwingkreis und einen zweiten Träger 29 auf. Mindestens eines der Umrichtelemente ist auf dem zweiten Träger 29 angeordnet. Außerdem ist beispielsweise ein erstes Resonanzelement 28 des Resonanzschwingkreises auf dem zweiten Träger 29 angeordnet.

Der erste Gleichrichter 20 ist über eine Sicherung Si und eine Funkentstördrossel L1 mit der Energieversorgung 12 elektrisch gekoppelt. Die Sicherung Si ist beispielsweise einerseits mit der Energieversorgung 12 und andererseits mit einem ersten Knoten K1 elektrisch gekoppelt. Die Funkentstördrossel L1 ist beispielsweise einerseits mit der Energieversorgung 12 und andererseits mit einem zweiten Knoten K2 elektrisch gekoppelt. Der erste Gleichrichter 20 und die Funkentstördrossel L1 können beispielsweise als Eingangsfilter bezeichnet werden. Die Sicherung Si kann eine maximal zulässige Stromstärke beispielsweise auf 1 bis 10 A, beispielswiese auf 2 A begrenzen. Die Funkentstördrossel L1 kann die Energieversorgung 12 vor den hohen Frequenzen in dem elektronischen Vorschaltgerät 20 schützen. Die Funkentstördrossel L1 kann beispielsweise eine erste Spule aufweisen. Die erste Spule kann beispielsweise eine Induktivität zwischen 1 und 10, beispielsweise von 2,2 mH aufweisen.

Der erste Gleichrichter 10 weist beispielsweise eine erste Diode D1, eine zweite Diode D2, eine dritte Diode D3 und/oder eine vierte Diode D4 auf. Der erste Gleichrichter 10 und insbesondere die Dioden D1 bis D4 dienen zum Gleichrichten der Netzspannung der Energieversorgung 12. Eine Anode der ersten Diode D1 ist beispielsweise mit dem ersten Knoten K1 elektrisch gekoppelt und eine Kathode der ersten Diode D1 ist beispielsweise mit einem dritten Knoten K3 elektrisch gekoppelt. Eine Anode der zweiten Diode D2 ist beispielsweise mit dem einem vierten Knoten K4 elektrisch gekoppelt und eine Kathode der zweiten Diode D2 ist beispielsweise mit dem ersten Knoten K1 elektrisch gekoppelt. Eine Anode der dritten Diode D3 ist beispielsweise mit dem zweiten Knoten K2 elektrisch gekoppelt und eine Kathode der dritten Diode D3 ist beispielsweise mit dem dritten Knoten K3 elektrisch gekoppelt. Eine Anode der vierten Diode D4 ist beispielsweise mit dem vierten Knoten K4 elektrisch gekoppelt und eine Kathode der vierten Diode D4 ist beispielsweise mit dem zweiten Knoten K2 elektrisch gekoppelt. Beispielsweise können die Dioden D1 bis D4 gemäß JEDEC 1N4005-Dioden sein.

Der erste Glätter 24 weist beispielsweise einen ersten Kondensator C1, der beispielsweise als Siebkondensator, beispielsweise als Elektrolyt-Kondensator, ausgebildet ist. Der erste Glätter 24 ist mit dem ersten Gleichrichter 22 elektrisch gekoppelt. Beispielsweise ist eine Anode des ersten Kondensators C1 mit dem dritten Knoten K3 gekoppelt und eine Kathode des ersten Kondensators C1 ist mit dem vierten Knoten K4 elektrisch gekoppelt. Der erste Glätter 24 dient beispielsweise zum Glätten der von dem ersten Gleichrichter 22 gleich gerichteten Netzspannung. Der erste Kondensator C1 hat beispielsweise eine Kapazität von 1 bis 10 µF, beispielsweise 2,2 µF.

Der Wechselrichter 26 weist beispielsweise einen ersten Widerstand R1, einen zweiten Widerstand R2, einen dritten Widerstand R3, einen vierten Widerstand R4, einen fünften Widerstand R5, einen sechsten Widerstand R6, einen siebten Widerstand R7 und/oder einen achten Widerstand R8 auf. Der Wechselrichter 26 weist weiter beispielsweise einen zweiten Kondensator C2, einen dritten Kondensator C3, einen vierten Kondensator C4, einen fünften Kondensator C5, einen sechsten Kondensator C6 und/oder einen siebten Kondensator C7 auf. Ferner weist der Wechselrichter 26 beispielsweise eine fünfte Diode D5, einen Ringkernübertrager mit einer ersten Wicklung RK1, einer zweiten Wicklung RK2 und einer dritten Wicklung RK3, einen ersten Transistor T1, einen zweiten Transistor T2 und/oder einen Diac DIAC auf.

Beispielsweise ist der zweite Kondensator C2 einerseits mit dem vierten Knoten K4 und andererseits mit dem ersten Widerstand R1 elektrisch gekoppelt. Der Widerstand R1 ist beispielsweise einerseits mit dem zweiten Kondensator C2 und andererseits mit einem fünften Knoten K5 elektrisch gekoppelt. Der zweite Widerstand R2 ist beispielsweise einerseits mit dem fünften Knoten K5 und andererseits mit einem sechsten Knoten K6 elektrisch gekoppelt. Eine Anode der fünften Diode D4 ist beispielsweise mit dem fünften Knoten K5 und eine Kathode der fünften Diode D5 ist beispielsweise mit dem sechsten Knoten K6 elektrisch gekoppelt. Beispielsweise ist der Diac DIAC mit dem fünften Knoten K5 und einem siebten Knoten K7 elektrisch gekoppelt. Beispielsweise ist die zweite Wicklung RK2 einerseits mit dem vierten Knoten K4 und andererseits mit dem vierten Widerstand R4 elektrisch gekoppelt. Beispielsweise ist der vierte Widerstand R4 einerseits mit der zweiten Wicklung RK2 und andererseits mit dem siebten Knoten K7 elektrisch gekoppelt. Beispielsweise sind eine Basis des zweiten Transistors T2 mit dem siebten Knoten K7, ein Emitter des zweiten Transistors T2 mit dem sechsten Widerstand R6 und ein Kollektor des zweiten Transistors T2 mit dem sechsten Knoten K6 elektrisch gekoppelt. Beispielsweise ist der vierte Kondensator C4 einerseits mit dem vierten Knoten K4 und andererseits mit dem siebten Knoten K7 elektrisch gekoppelt. Beispielsweise ist die erste Wicklung RK1 einerseits mit dem sechsten Knoten K6 und andererseits mit dem dritten Widerstand R3 elektrisch gekoppelt. Beispielsweise ist der dritte Widerstand R3 einerseits mit der ersten Wicklung RK1 und andererseits mit einem achten Knoten K8 elektrisch gekoppelt. Beispielsweise sind eine Basis des ersten Transistors T1 mit dem achten Knoten K8, ein Emitter des ersten Transistors T1 mit dem fünften Widerstand R5 und ein Kollektor des ersten Transistors T1 mit dem dritten Knoten K3 elektrisch gekoppelt. Beispielsweise ist der dritte Kondensator C3 einerseits mit dem sechsten Knoten K6 und andererseits mit dem achten Knoten K8 elektrisch gekoppelt. Beispielsweise ist der fünfte Widerstand R5 einerseits mit dem sechsten Knoten K6 und andererseits mit dem Emitter des ersten Transistors T1 elektrisch gekoppelt. Beispielsweise ist der sechste Widerstand R6 einerseits mit dem Emitter des zweiten Transistors T2 und andererseits mit dem vierten Knoten K4 elektrisch gekoppelt. Beispielsweise ist der siebte Widerstand R7 einerseits mit dem sechsten Knoten K6 und andererseits mit dem dritten Knoten K3 elektrisch gekoppelt. Beispielsweise ist der fünfte Kondensator C5 einerseits mit dem dritten Knoten K3 und andererseits mit einem neunten Knoten K9 elektrisch gekoppelt. Beispielsweise ist der sechste Kondensator C6 einerseits mit dem vierten Knoten K4 und andererseits mit dem neunten Knoten K9 elektrisch gekoppelt. Beispielsweise ist der achte Widerstand R8 einerseits mit dem neunten Knoten K9 und andererseits mit dem siebten Kondensator C7 elektrisch gekoppelt. Beispielsweise ist der siebte Kondensator C7 einerseits mit dem achten Widerstand R8 und andererseits mit dem sechsten Knoten K6 elektrisch gekoppelt. Beispielsweise ist die dritte Wicklung RK3 einerseits mit dem sechsten Knoten K6 elektrisch gekoppelt.

Der erste Widerstand R1 beträgt beispielsweise zwischen 40 und 50 Ω, beispielsweise 47 Ω. Der zweite und/oder der siebte Widerstand R2, R7 betragen beispielsweise zwischen 500 kΩ und 1000 kΩ, beispielsweise 680 kΩ. Der dritte und/oder der vierte Widerstand R3, R4 betragen beispielsweise zwischen 10 und 20 Ω, beispielsweise 12 Ω. Der fünfte und/oder der sechste Widerstand R5, R6 betragen beispielsweise zwischen 1 und 5 Ω beispielsweise 1,8 Ω. Der achte Widerstand R8 kann beispielsweise ein Bedämpfungswiderstand für einen siebten Kondensator C7 sein und/oder der achte Widerstand R8 beträgt beispielsweise zwischen 1 und 10 Ω, beispielsweise 4,7 Ω. Der zweite Kondensator C2 hat beispielsweise eine Kapazität von 10 bis 50 nF, beispielsweise 47 nF. Der dritte und/oder der vierte Kondensator C3, C4 haben beispielsweise eine Kapazität von 10 bis 50 nF, beispielsweise 22 nF. Der fünfte und/oder der sechste Kondensator C5, C6 sind beispielsweise Gleichstrom-Auskoppelkondensatoren und/oder haben eine Kapazität von 10 bis 50 nF, beispielsweise 47 nF. Der siebte Kondensator C7 ist beispielsweise ein Trapezkondensator und/oder hat eine Kapazität beispielsweise zwischen 0,5 nF und 10 nF, beispielsweise zwischen 1 und 5 nF, beispielsweise 2,2 nF. Die fünfte Diode D5 ist beispielsweise eine 1N4005-Diode. Der Ringkernübertrager mit seinen Wicklungen RK1, RK2 und/oder RK3 hat beispielsweise einen Ferrit-Kern mit einem Durchmesser beispielsweise zwischen 1 und 12 mm, beispielsweise zwischen 4 und 10 mm, beispielsweise 8 mm. Die Wicklungen können beispielsweise ein Windungsverhältnis von 3:3:6 haben, d.h. dass beispielsweise die erste Wicklung RK1 drei Windungen hat, die zweite Wicklung RK2 drei Windungen hat und die dritte Wicklung RK3 sechs Windungen hat. Der erste Transistor T1 und/oder der zweite Transistor T2 sind beispielsweise MPSA42 On-Semiconductoren, beispielsweise spezifiziert auf 500V.

Der Wechselrichter 26 kann beispielsweise als Halbbrückenschaltung mit Ringkernsteuerung ausgebildet sein. Alternativ dazu können die Schaltelemente des Wechselrichters 26 auch von einer Spannung aus mindestens einer Hilfswicklung auf der Resonanz-Drossel gesteuert werden, wobei die Steuerspannung in Kurvenform und Phasenlage durch zusätzliche Bauelemente geformt werden kann, oder die Schaltelemente des Wechselrichters können mit Hilfe einer Spannung betrieben werden, die während der Freilauf-Phase gewonnen wird (entsprechende Wechselrichter siehe z.B. EP 0 530 603 A1, EP 0 781 077 A2, EP 0 863 690 A2). Der Wechselrichter 26 wandelt die gleich gerichtete und geglättete Netzspannung in eine hochfrequente Wechselspannung um. Die hochfrequente Wechselspannung dient mittelbar oder unmittelbar als Betriebsspannung für die Strahlungseinheit 30.

Der Resonanzschwingkreis weist ein erstes Resonanzelement 28 und ein zweites Resonanzelement 32 auf. Mindestens eines der Resonanzelemente 28, 32 ist auf dem zweiten Träger 29 angeordnet, beispielsweise das erste Resonanzelement 28. Das erste und das zweite Resonanzelement 28, 32 sind über den Anschluss 14 elektrisch mit einander verbunden. Der Resonanzschwingkreis weist beispielsweise eine Resonanzdrossel L2 und einen Resonanzkondensator C8 auf. Beispielsweise weisen das erste Resonanzelement 28 die Resonanzdrossel L2 und das zweite Resonanzelement 32 den Resonanzkondensator C8 auf. Alternativ dazu können auch das erste Resonanzelement 28 den Resonanzkondensator C8 und das zweite Resonanzelement 32 die Resonanzdrossel L2 aufweisen. Ferner kann der Resonanzschwingkreis einen Dämpfungswiderstand R9 gegen parasitäre hochfrequente Schwingungen aufweisen. Beispielsweise ist die Resonanzdrossel L2 einerseits mit der dritten Wicklung RK3 und andererseits mit einem zehnten Knoten K10 elektrisch gekoppelt. Beispielsweise ist der Dämpfungswiderstand R9 einerseits mit dem Resonanzkondensator C8 und andererseits mit dem zehnten Knoten K10 elektrisch gekoppelt. Beispielsweise ist der Resonanzkondensator C8 einerseits mit dem Dämpfungswiderstand R9 und andererseits mit dem neunten Knoten K9 elektrisch gekoppelt. Der Resonanzkondensator C8 kann beispielsweise eine Kapazität zwischen 1 und 10 nF, beispielsweise 2,7 nF aufweisen. Der Dämpfungswiderstand R9 kann beispielsweise zwischen 1 und 10 Ω, beispielsweise 4,7 Ω aufweisen.

Die von dem elektronischen Vorschaltgerät 20 erzeugte Betriebsspannung wird der Strahlungseinheit 30 mittels des Resonanzschwingkreises und des Anschlusses 14 bereitgestellt.

Die Strahlungseinheit 30 weist das zweite Resonanzelement 32, einen zweiten Gleichrichter 34, optional einen zweiten Glätter 36 und eine Strahlungsanordnung 38 auf, wobei die Strahlungsanordnung 38 beispielsweise erste bis n-te elektromagnetische Strahlung emittierende Halbleiter-Bauelemente LED1 bis LEDN aufweist. Beispielsweise kann die Strahlungsanordnung 38 zwischen zwanzig und dreißig, beispielsweise vierundzwanzig elektromagnetische Strahlung emittierende Halbleiter-Bauelemente LED1 bis LEDN aufweisen. Die Strahlungseinheit 30 weist weiter einen ersten Träger 39 auf, auf dem beispielsweise das zweite Resonanzelement 32, der zweite Gleichrichter 34, der zweite Glätter 36 und/oder die Strahlungsanordnung 38 angeordnet sind.

Der zweite Gleichrichter 34 weist beispielsweise eine sechste Diode D6, eine siebte Diode D7, eine achte Diode D8 und/oder eine neunte Diode D9 auf. Der zweite Gleichrichter 34 dient zum Gleichrichten der Betriebsspannung, die von dem Wechselrichter 26 erzeugt wird und der Strahlungseinheit 30 bereitgestellt wird und mit Hilfe des Resonanzschwingkreises und des Anschlusses 14 zu der Strahlungseinheit 30 übertragen wird. Beispielsweise sind eine Anode der sechsten Diode D6 mit dem neunten Knoten K9 und eine Kathode der sechsten Diode D6 mit einem elften Knoten K11 elektrisch gekoppelt. Beispielsweise sind eine Anode der siebten Diode D7 mit einem zwölften Knoten K12 und eine Kathode der siebten Diode D7 mit dem neunten Knoten K9 elektrisch gekoppelt. Beispielsweise sind eine Anode der achten Diode D8 mit dem zehnten Knoten K10 und eine Kathode der achten Diode D8 mit dem elften Knoten K11 elektrisch gekoppelt. Beispielsweise sind eine Anode der neunten Diode D9 mit dem zwölften Knoten K12 und eine Kathode der neunten Diode D9 mit dem zehnten Knoten K10 elektrisch gekoppelt. Die sechste, siebte, achte und/oder neunte Diode D6 bis D9 können beispielsweise als LL4148-Dioden zur Hochfrequenz-Gleichrichtung ausgebildet sein.

Der zweite Glätter 36 kann beispielsweise einen HF-Glättungs-Kondensator C9 aufweisen. Beispielsweise ist der HF-Glättungs-Kondensator C9 einerseits mit dem elften Knoten K11 und andererseits mit dem zwölften Knoten K12 elektrisch gekoppelt. Der HF-Glättungskondensator C9 kann beispielsweise eine Kapazität zwischen 100nF und 1 µF, beispielsweise zwischen 300 nF und 400 nF, beispielsweise 330 nF aufweisen. Der zweite Glätter 36 dient zum Glätten der gleich gerichteten Betriebsspannung.

Die Strahlungsanordnung 38 weist die ersten bis n-ten elektromagnetische Strahlung emittierenden Halbleiter-Bauelemente LED1 bis LEDN auf, die mit Hilfe der gleich gerichteten und geglätteten Betriebsspannung betrieben werden. Beispielsweise sind Anoden der elektromagnetische Strahlung emittierenden Halbleiter-Bauelemente LED1 bis LEDN mit dem elften Knoten K11 und Kathoden der elektromagnetische Strahlung emittierenden Halbleiter-Bauelemente LED1 bis LEDN mit dem zwölften Knoten K12 elektrisch gekoppelt.

Bei dem ersten Gleichrichter 22, dem ersten Glätter 24, dem Wechselrichter 26, dem zweiten Gleichrichter 34, dem zweiten Glätter 36 und/oder den elektromagnetische Strahlung emittierenden Halbleiter-Bauelementen LED1 bis LEDN kann es sich beispielsweise um herkömmliche Bauelemente zum Gleichrichten, Glätten, Wechselrichten bzw. Erzeugen von elektromagnetischer Strahlung handeln, deren Funktion und Wirkung dem auf diesem technischen Gebiet zuständigen Fachmann wohlbekannt sind und zusätzlich aus Figur 2 entnehmbar sind. Daher wird in dieser Anmeldung auf eine detaillierte Beschreibung der Funktion und Wirkung dieser Bauelemente verzichtet.

Im Unterschied zu einer herkömmlichen Vorrichtung zum Erzeugen von elektromagnetischer Strahlung wird bei den in dieser Beschreibung gezeigten Ausführungsbeispielen ein elektronisches Vorschaltgerät 20, wie es von Entladungslampen bekannt ist, beispielsweise ein frei schwingend ausgebildetes elektronisches Vorschaltgerät 20, zum Betreiben einer Strahlungseinheit 30 mit elektromagnetische Strahlung emittierenden Halbleiter-Bauelementen LED1 bis LEDN verwendet. Dazu wird im Unterschied zu den herkömmlichen elektronischen Vorschaltgeräten und Strahlungseinheiten der Resonanzschwingkreis so auf die beiden Träger 29, 32 aufgeteilt, dass bei einer elektrischen Trennung des elektronischen Vorschaltgeräts 20 von der Strahlungseinheit 30 das elektronische Vorschaltgerät 20 und/oder der Resonanzschwingkreis nicht mehr schwingfähig ist, wodurch eine übermäßige Resonanzüberhöhung oder ein sehr hohes Aufschwingen der Resonanzspannung, wodurch beispielsweise eine Beschädigung des elektronischen Vorschaltgeräts 20 auftreten kann, verhindert wird. Beispielsweise erfolgt bei einer elektrischen Unterbrechung der Anschlüsse 14 auch eine Trennung der Resonanzelemente 28, 32 des Resonanzschwingkreises.

Alternativ zu dem in Figur 2 gezeigten Ausführungsbeispiel kann auch der gesamte Resonanzschwingkreis auf dem ersten Träger 39 angeordnet sein. Dadurch erfolgt bei einer elektrischen Trennung der Anschlüsse 14 eine elektrische Trennung des Resonanzschwingkreises von dem restlichen elektronischen Vorschaltgerät 20, wodurch eine übermäßige Resonanzüberhöhung oder ein sehr hohes Aufschwingen der Resonanzspannung, wodurch beispielsweise eine Beschädigung des elektronischen Vorschaltgeräts 20 auftreten kann, verhindert wird.

Beispielsweise weisen die elektromagnetische Strahlung emittierenden Halbleiter-Bauelemente LED1 bis LEDN nicht dargestellte antiparallele Schutzdioden auf. Die Schutzdioden können beispielsweise eine niedrigere Durchfluss-Spannung haben als die elektromagnetische Strahlung emittierenden Halbleiter-Bauelemente LED1 bis LEDN.

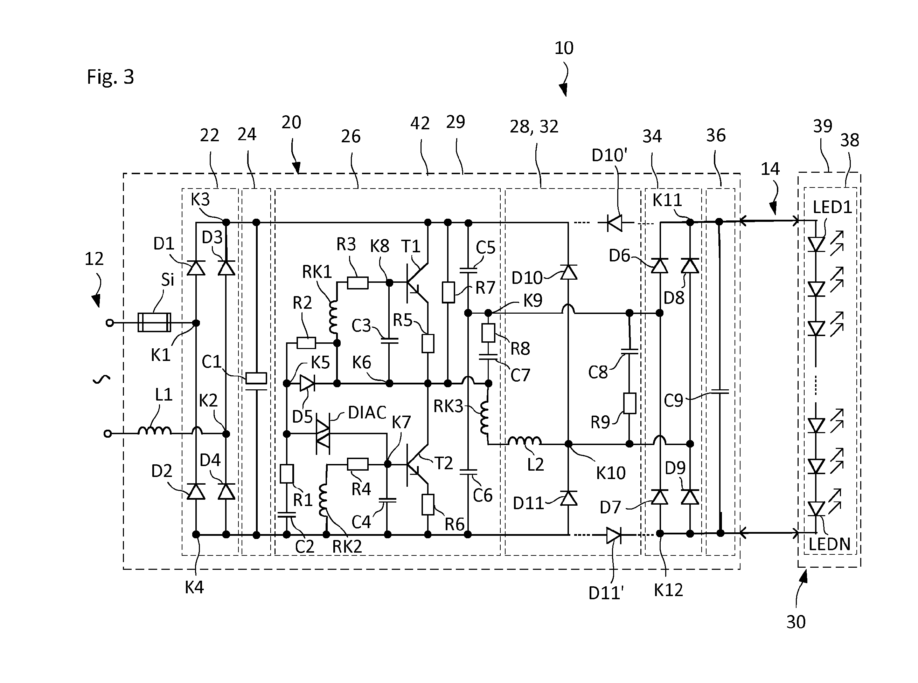

**Fig. 3** zeigt einen Schaltkreis eines Ausführungsbeispiels der Vorrichtung 10 zum Erzeugen der elektromagnetischen Strahlung, das weitgehend dem in Figur 2 gezeigten Ausführungsbeispiel entspricht, wobei im Unterschied dazu bei dem in Figur 3 gezeigten Ausführungsbeispiel ein Spannungsbegrenzer so ausgebildet und angeordnet ist, dass er die von dem Wechselrichter 26 erzeugte Betriebsspannung auf einen Maximalwert begrenzt.

Ferner können im Unterschied zu dem in Figur 2 gezeigten Ausführungsbeispiel die Resonanzelemente 28, 32 optional beide auf dem zweiten Träger 29 angeordnet sein. Alternativ oder zusätzlich können beispielsweise der zweite Gleichrichter 34 und/oder der zweite Glätter 36 auf dem zweiten Träger 29 angeordnet sein und/oder der zweite Gleichrichter 34 und/oder der zweite Glätter 36 können auf dem ersten Träger 39 angeordnet sein.

Der Spannungsbegrenzer weist beispielsweise eine zehnte Diode D10 und/oder eine elfte Diode D11 auf. Die zehnte und/oder elfte Diode D10, D11 sind beispielsweise in Reihe geschaltet. Die zehnte und/oder elfte Diode D10, D11 begrenzen die vom Wechselrichter 26 bereitgestellte Betriebsspannung beispielsweise von Plus nach Minus. Beispielsweise sind eine Anode der zehnten Diode D10 mit dem zehnten Knoten K10 und eine Kathode der zehnten Diode D10 mit dem dritten Knoten K3 elektrisch gekoppelt. Beispielsweise sind eine Anode der elften Diode D11 mit dem vierten Knoten K4 und eine Kathode der elften Diode D11 mit dem zehnten Knoten K10 elektrisch gekoppelt. Gegebenenfalls können die zehnte und/oder die elfte Diode D10, D11 beispielsweise als ausreichend schnelle Dioden, beispielsweise als BA158-Dioden, ausgebildet sein. Die Dioden D6, D7, D8 und D9 können bei diesem Ausführungsbeispiel beispielsweise vom Typ BA158 sein.

Alternativ dazu können eine alternativ zehnte und/oder alternative elfte Diode D10', D11' auch vom Pluspol der gleichgerichteten Betriebsspannung zum Pluspol der gleichgerichteten Netzspannung und/oder vom Minuspol der gleichgerichteten Betriebsspannung zum Minuspol der gleichgerichteten Netzspannung angeordnet sein. Beispielsweise sind eine Anode der alternativen zehnten Diode D10' mit dem elften Knoten K11 und eine Kathode der alternativen zehnten Diode D10' mit dem dritten Knoten K3 elektrisch gekoppelt. Beispielsweise sind eine Anode der alternativen elften Diode D11' mit dem vierten Knoten K4 und eine Kathode der alternativen elften Diode D11' mit dem zwölften Knoten K12 elektrisch gekoppelt. Gegebenenfalls können die alternative zehnte und/oder die alternative elfte Diode D10', D11' beispielsweise auch als langsame Dioden, beispielsweise als 1N4005-Dioden, ausgebildet sein.

Falls die Strahlungseinheit 30 elektrisch von dem elektronischen Vorschaltgerät 20 getrennt wird, so kann das elektromische Vorschaltgerät 20 zwar weiter schwingen, die Betriebsspannung erreicht jedoch höchstens den Maximalwert, wodurch die übermäßige Resonanzüberhöhung oder das sehr hohe Aufschwingen der Resonanzspannung, wodurch das elektronische Vorschaltgeräts 20 beschädigt werden kann, verhindert wird. Ferner kann die im Resonanzschwingkreis gespeicherte Energie bis auf die Verluste in den Bauelementen des Resonanzschwingkreises im elektronischen Vorschaltgerät erhalten bleiben.

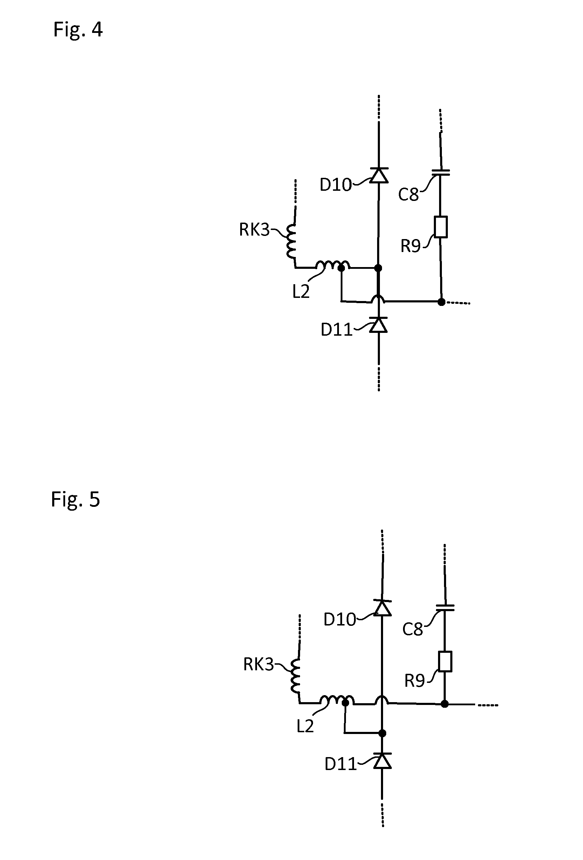

**Fig. 4** zeigt eine Detailansicht eines Blockschaltbilds eines Ausführungsbeispiels einer Vorrichtung 10 zum Erzeugen elektromagnetischer Strahlung. Beispielsweise zeigt Figur 4 ein Ausführungsbeispiel der Vorrichtung 10 gemäß Figur 3, bei dem die Resonanzdrossel L2 eine Anzapfung aufweist und das ansonsten dem in Figur 3 gezeigten Ausführungsbeispiel entspricht. Die Anzapfung ist eine Kontaktierung der Spule der Resonanzdrossel L2 zwischen ihren beiden Enden. Beispielsweise kann der Anfang der Wicklung der Resonanzdrossel L2 mit der dritten Wicklung RK3 gekoppelt sein und die Anzapfung kann mit dem Dämpfungswiderstand R9 und/oder mit dem Verknüpfungspunkt der achten und/oder neunten Diode D8, D9 gekoppelt sein, wobei das Ende der Wicklung der Resonanzdrossel L2 mit dem Verknüpfungspunkt der zehnten und/oder elften Diode D10 und D11 gekoppelt sein kann. Dies bewirkt, dass die maximale Ausgangsspannung des Resonanzkreises auf einen niedrigeren Wert begrenzt werden kann als den, den die Zwischenkreis-Gleichspannung an dem ersten Kondensator C1 hat.

**Fig. 5** zeigt eine Detailansicht eines Blockschaltbilds eines Ausführungsbeispiels einer Vorrichtung 10 zum Erzeugen elektromagnetischer Strahlung. Beispielsweise zeigt Figur 5 ein Ausführungsbeispiel der Vorrichtung 10 gemäß Figur 3, bei dem die Resonanzdrossel L2 die Anzapfung aufweist und das ansonsten dem in Figur 3 gezeigten Ausführungsbeispiel entspricht. Die Anzapfung ist eine Kontaktierung der Spule der Resonanzdrossel L2 zwischen ihren beiden Enden. Bei diesem Ausführungsbeispiel kann der Anfang der Wicklung der Resonanzdrossel L2 mit der dritten Wicklung RK3 gekoppelt sein und die Anzapfung kann mit dem Verknüpfungspunkt der zehnten und/oder elften Diode D10 und D11 gekoppelt sein, wobei das Ende der Wicklung der Resonanzdrossel L2 mit dem Dämpfungswiderstand R9 und/oder mit dem Verknüpfungspunkt der achten und/oder neunten Diode D8, D9 gekoppelt sein kann. Dies bewirkt, dass die maximale Ausgangsspannung des Resonanzkreises auf einen höheren Wert begrenzt werden kann als den, den die Zwischenkreis-Gleichspannung an dem ersten Kondensator C1 hat.

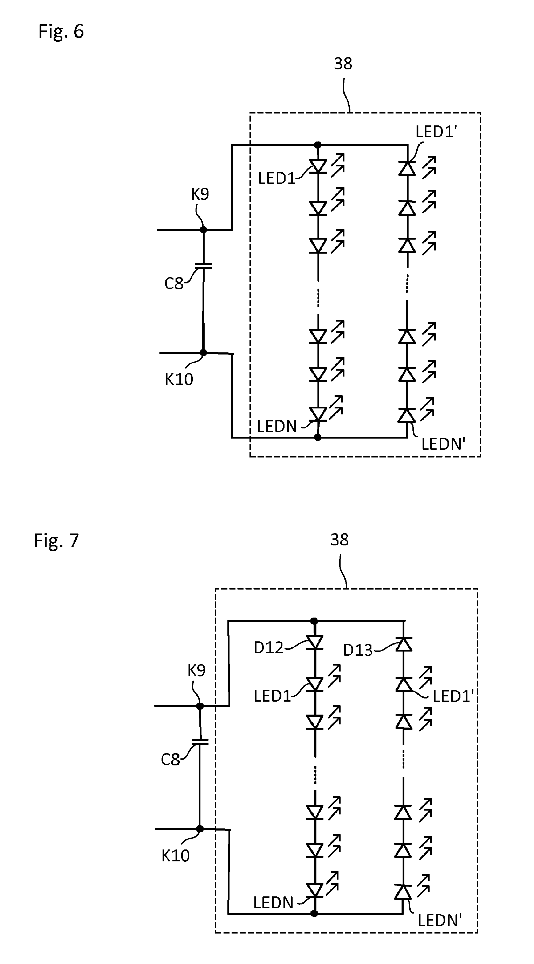

**Fig. 6** zeigt ein Ausführungsbeispiel der Vorrichtung 10 bei dem die Strahlungsanordnung 38 so ausgebildet ist, dass auf eine Hochfrequenz-Gleichrichtung und damit auf den zweiten Gleichrichter 34, insbesondere die sechste bis neunte Diode D6 bis D9 und den Glättungs-Kondensator C9 verzichtet werden kann. Ansonsten kann die Vorrichtung 10 gemäß einem der vorstehend erläuterten Ausführungsbeispiele ausgebildet sein. Beispielsweise kann die hochfrequente Ausgangsspannung des Wechselrichters 26 und/oder des elektronischen Vorschaltgeräts 20 direkt ohne Gleichrichtung an die Strahlungsanordnung 38, insbesondere die elektromagnetische Strahlung emittierenden Halbleiter-Bauelementen LED1 bis LEDN, angelegt werden, wenn die Strahlungsanordnung 38 einen zweiten Strang mit zweiten elektromagnetische Strahlung emittierenden Halbleiter-Bauelementen LED1' bis LEDN' aufweist. Die zweiten elektromagnetische Strahlung emittierenden Halbleiter-Bauelementen LED1' bis LEDN' sind einem ersten Strang mit den elektromagnetische Strahlung emittierenden Halbleiter-Bauelementen LED1 bis LEDN anti-parallel geschaltet. Beispielsweise haben bei diesem Ausführungsbeispiel die ersten und zweiten elektromagnetische Strahlung emittierenden Halbleiter-Bauelemente LED1 bis LEDN und LED1' bis LEDN' keine antiparallelen Schutzdioden, da sonst der Strom über die Schutzdioden des jeweils anders gepolten Strangs verlaufen kann.

Ferner weist bei dem in Figur 6 gezeigten Ausführungsbeispiel die Vorrichtung keinen Dämpfungswiderstand R9 auf. Alternativ kann der Dämpfungswiderstand R9 jedoch wie vorstehend erläutert angeordnet sein. Ferner kann optional auch bei den vorstehend erläuterten Ausführungsbeispielen auf den Dämpfungswiderstand R9 verzichtet werden.

**Fig. 7** zeigt ein Ausführungsbeispiel der Vorrichtung, das weitgehend dem in Figur 6 gezeigten Ausführungsbeispiel entsprechen kann, wobei bei dem in Figur 7 gezeigten Ausführungsbeispiel die elektromagnetische Strahlung emittierenden Halbleiter-Bauelemente LED1 bis LEDN und LED1' bis LEDN' jeweils anti-parallel geschaltete Schutzdioden aufweisen können. Zum Verhindern eines ungewünschten Stromflusses sind beispielsweise eine zwölfte Diode D12 und/oder eine dreizehnte Diode D13 vorgesehen. Die zwölfte und/oder dreizehnte Diode 12, 13 sind beispielsweise serielle schnelle Diode, beispielsweise vom Typ 1N4148. Dies kann die Effizienz Vorrichtung erhöhen.

Ferner weist bei dem in Figur 7 gezeigten Ausführungsbeispiel die Vorrichtung keinen Dämpfungswiderstand R9 auf. Alternativ kann der Dämpfungswiderstand R9 jedoch wie vorstehend erläutert angeordnet sein.

Die Erfindung ist nicht auf die angegebenen Ausführungsbeispiele beschränkt. Beispielsweise können die Ausführungsbeispiele miteinander kombiniert werden. Beispielsweise können die Resonanzelemente auf dem ersten und zweiten Träger separiert werden und der Spannungsbegrenzer kann zusätzlich angeordnet werden. Ferner können die Bauelemente anders dimensioniert sein. Ferner können als Gleichrichter, Glätter und/oder Wechselrichter andere bekannte Bauelemente verwendet werden, die beispielsweise andere Schaltkreise aufweisen, jedoch gleiche oder ähnliche Funktionen erfüllen. Ferner kann die Strahlungsanordnung 38 lediglich ein, zwei oder mehr, beispielsweise auch mehr als vierundzwanzig elektromagnetische Strahlung emittierende Halbleiter-Bauelemente LED1 bis LEDN aufweisen.

## Patentansprüche

1. Vorrichtung (10) zum Erzeugen von elektromagnetischer Strahlung, mit
- einer Strahlungseinheit (30), die mindestens ein elektromagnetische Strahlung emittierendes Halbleiter-Bauelement (LED1, ..., LEDN) zum Erzeugen der elektromagnetischen Strahlung und einen ersten Träger (39) zum Tragen des elektromagnetische Strahlung emittierenden Halbleiter-Bauelements (LED1, ..., LEDN) aufweist, und
- einem elektronischen Vorschaltgerät (20) mit einem Umrichter, der mindestens ein Umrichtelement (22, 24, 26) aufweist, mit einem zweiten Träger (29) zum Tragen mindestens eines der Umrichtelemente (22, 24, 26) und mit einem Resonanzschwingkreis, der zum Bereitstellen einer Betriebsspannung für das elektromagnetische Strahlung emittierende Halbleiter-Bauelement (LED1, ..., LEDN) mit der Strahlungseinheit (30) elektrisch gekoppelt ist, wobei mindestens ein Resonanzelement (32) des Resonanzschwingkreises auf dem ersten Träger (39) angeordnet ist.

2. Vorrichtung (10) nach Anspruch 1, bei der das auf dem ersten Träger (39) angeordnete Resonanzelement (32) eine Spule (L2) aufweist.

3. Vorrichtung (10) nach Anspruch 1, bei der das auf dem ersten Träger (39) angeordnete Resonanzelement (32) einen Kondensator (C8) aufweist.

4. Vorrichtung (10) nach Anspruch 1, bei der der Resonanzschwingkreis eine Spule (L2) und einen Kondensator (C8) aufweist und bei der die Spule (L2) und der Kondensator (C8) auf dem ersten Träger (39) angeordnet sind.

5. Vorrichtung (10) nach einem der vorstehenden Ansprüche, bei der der Umrichter als Umrichtelemente einen ersten Gleichrichter (22), einen ersten Glätter (24) und/oder einen Wechselrichter (26) aufweist, wobei der erste Gleichrichter (20), der erste Glätter (24) und/oder der Wechselrichter (26) auf dem zweiten Träger (20) angeordnet sind.

6. Vorrichtung (10) nach einem der vorstehenden Ansprüche, bei der das elektronische Vorschaltgerät (20) frei schwingend ausgebildet ist.

7. Vorrichtung (10) nach einem der vorstehenden Ansprüche, bei der die Strahlungseinheit (30) mindestens einen zweiten Gleichrichter (34) aufweist, der auf dem ersten Träger (39) angeordnet ist und der elektrisch zwischen das auf dem ersten Träger (39) angeordnete Resonanzelement (32) und das elektromagnetische Strahlung emittierende Halbleiter-Bauelement (LED1, ..., LEDN) geschaltet ist und so ausgebildet und angeordnet ist, dass er die der Strahlungseinheit (30) von dem elektronischen Vorschaltgerät (20) bereitgestellte Betriebsspannung gleich richtet.

8. Vorrichtung (10) nach einem der vorstehenden Ansprüche, bei der das elektromagnetische Strahlung emittierende Halbleiter-Bauelement (LED1, ..., LEDN) eine LED oder eine OLED ist.

9. Elektronisches Vorschaltgerät (20) zum Bereitstellen einer Betriebsspannung für mindestens ein elektromagnetische Strahlung emittierendes Halbleiter-Bauelement (LED1, ..., LEDN), mit einem Resonanzschwingkreis, der einen Anschluss zum Bereitstellen der Betriebsspannung für das elektromagnetische Strahlung emittierende Halbleiter-Bauelement (LED1, ..., LEDN) aufweist, und mit einem Spannungsbegrenzer, der so mit dem Resonanzschwingkreis elektrisch gekoppelt ist, dass er die Betriebsspannung begrenzt.

10. Elektronisches Vorschaltgerät (20) nach Anspruch 9, bei der der Spannungsbegrenzer mindestens eine Diode (D10, D10', D11, D11') aufweist.

11. Elektronisches Vorschaltgerät (20) nach Anspruch 10, bei der der Spannungsbegrenzer mindestens zwei in Reihe geschaltete Dioden (D10, D11,) aufweist.

12. Elektronisches Vorschaltgerät (20) nach einem der Ansprüche 9 bis 11, das frei schwingend ausgebildet ist.

13. Vorrichtung (10) zum Erzeugen von elektromagnetischer Strahlung, mit dem elektronischen Vorschaltgerät (20) nach einem der Ansprüche 9 bis 12 und mit mindestens einem elektromagnetische Strahlung emittierenden Halbleiter-Bauelement (LED1, ..., LEDN) zum Erzeugen der elektromagnetischen Strahlung, wobei das elektromagnetische Strahlung emittierende Halbleiter-Bauelement (LED1, ..., LEDN) mit dem Anschluss des Resonanzschwingkreises elektrisch gekoppelt ist.

14. Vorrichtung (10) nach einem der Ansprüche 9 bis 13, bei der das elektromagnetische Strahlung emittierende Halbleiter-Bauelement (LED1, ..., LEDN) eine LED oder eine OLED ist.

15. Vorrichtung (10) nach einem der Ansprüche 1 bis 8 und einem der Ansprüche 9 bis 14, mit dem auf dem ersten Träger (39) angeordneten Resonanzelement (32) und dem Spannungsbegrenzer.
